Europäisches Patentamt

European Patent Office

Office européen des brevets

(11) Numéro de publication: **0 358 614**
**A2**

## (12) DEMANDE DE BREVET EUROPEEN

(21) Numéro de dépôt: **89830375.5**

(22) Date de dépôt: **05.09.89**

(51) Int. Cl.⁵: **G 03 B 27/04**

(30) Priorité: **07.09.88 IT 2185888**

(43) Date de publication de la demande:
**14.03.90 Bulletin 90/11**

(84) Etats contractants désignés:
**AT BE CH DE ES FR GB GR IT LI NL SE**

(71) Demandeur: **Paletti, Raffaele**
**34, Via Brescia**
**I-25086 Rezzato (Brescia) (IT)**

(72) Inventeur: **Paletti, Raffaele**
**34, Via Brescia**
**I-25086 Rezzato (Brescia) (IT)**

(74) Mandataire: **Manzoni, Alessandro**
**MANZONI & MANZONI - UFFICIO INTERNAZIONALE**
**BREVETTI P.le Arnaldo n. 2**
**I-25121 Brescia (IT)**

(54) **Appareillage pour le tirage par contact de photographies en couleurs, en noir et blanc et similaires.**

(57) L'invention concerne un appareillage pour l'impression par contact de photographies en couleurs, en noir et blanc et similaires qui comprend une unité verticalement déplaçable à l'intérieur d'une tête à imprimer et munie d'une plaque transparente de base à laquelle on applique une pellicule d'impression destinée à être porté à contact d'un papier sensible placé sur un plan. Une source lumineuse agit à travers la plaque transparente pour impressioner le papier sensible quand la pellicule est à contact du papier lui-même. L'appareillage peut être associé à un appareil pour le tirage et/ou le grossissement des photographies de manière à consentir l'impression de mots, signes et figures soit à côté de soit sur l'image photographique.

Fig. 1

## Description

### Appareillage pour le tirage par contact de photographies en couleurs, en noir et blanc et similaires

L'invention concerne un appareillage pour le tirage par contact de photographies en couleurs, en noir et blanc et similaires.

On sait bien qu'à présent, pour effectuer des tirages par contact on utilise des appareils appelés photocopieurs qui consentent l'application sur papier sensible de mots, signes et figures.

Ces appareils sont indépendants et ne pas combinables avec les appareillages pour le tirage photographique.

A présent, pour réaliser le grossissement des figures reproduites photographiquement sur pellicule transparente on utilise des appareils automatiques d'agrandissement qui reproduisent l'image avec les dimensions désirées sur papier sensible, cette image étant en suite développée de manière connue.

Pour réaliser ensuite l'impression de mots, signes ou symboles à côté de l'image imprimée sur papier sensible, les techniques actuelles prévoient un appareil séparé de projection pour le positionnement d'une pellicule, avec les signes à reproduire opaques, à contact avec la partie de papier sensible à côté de l'image agrandie et après la projection, au moyen de la lumière, des signes, directement sur le papier sensible.

En conséquence, les techniques actuellement utilisées demandent l'emploi de deux appareils séparés qui, outre que comporter des temps assez longs pour la réalisation de l'image et des mots ou figurations imprimées à son côté, demandent aussi une attention et une compétence particulières pour une manipulation correcte du papier sensible pendant son déplacement d'un appareil à l'autre et un centrage bien précis de la pellicule par rapport à l'image déjà imprimée.

Il est partant le but de cette invention de réaliser un appareillage pour le tirage par contact en couleurs et en noir et blanc qui permet de réaliser, même par une seule opération, sur papier sensible, soit l'impression et/ou le grossissement d'images de pellicules ou plaque photographiques, soit l'impression par contact de mots, signes et symboles à côté de ou en surpose à l'image, avec des avantages pratiques, économiques et qualitatifs bien évidents en comparaison des techniques connues utilisant des appareils séparés.

Un autre but de l'invention c'est ce de réaliser un appareillage pour le tirage par contact combiné avec un appareil pour l'impression et/ou le grossissement des photographies en obtenant un ensemble de haute fiabilité, peu encombrant et comportant un coût limité et en tout cas bien inférieur aux coûts des appareils séparés du type connu.

Ce but et des autres aussi, qui seront décrits ci de suite, sont obtenus par un appareillage pour le tirage par contact de photographies en couleurs et en noir et blanc, et aussi d'inscriptions, de signes ou de figures à côté de et/ou sur une reproduction photographique comme il est défini par la revendication 1.

Des autres avantages et caractéristiques de l'appareillage objet de l'invention resulteront plus évidents de la description suivante d'un exemple indicatif et ne pas limitatif avec référence au dessin ci-joint, où:

la Fig. 1 montre, en forme schématique, une vue perspective d'un appareil pour le grossissement d'images et le tirage par contact simultané de quelques mots et signes;

les Figures 2 et 3 montrent, toujours schématiquement, des parties en vue et des parties en section au-dedans de la tête à imprimer dont à la Fig. 1, respectivement avec la pellicule d'impression baissée sur le papier sensible et soulevée;

les Figures 4 et 5 montrent une vue de l'intérieur de la tête à imprimer par contact à 90° par rapport à la vue des Figures 2 et 3, qui représente le dispositif pour le soulèvement et l'abaissement de la pellicule, respectivement dans les positions avec pellicule soulevée et avec pellicule baissée;

la Fig. 6 montre une vue partielle d'en haut de l'intérieur de la tête à imprimer par contact; et

la Fig. 7 montre, en vue perspective éclatée, les parties principales de la tête à imprimer par contact réalisée selon l'invention.

L'appareillage pour le tirage et/ou le gros sissement photographique est composé d'un cadre porteur (1) avec un plan horizontal (2) sur lequel on fait glisser, horizontalement, un ruban de papier sensible du type normalement utilisé pour le tirage des photographies.

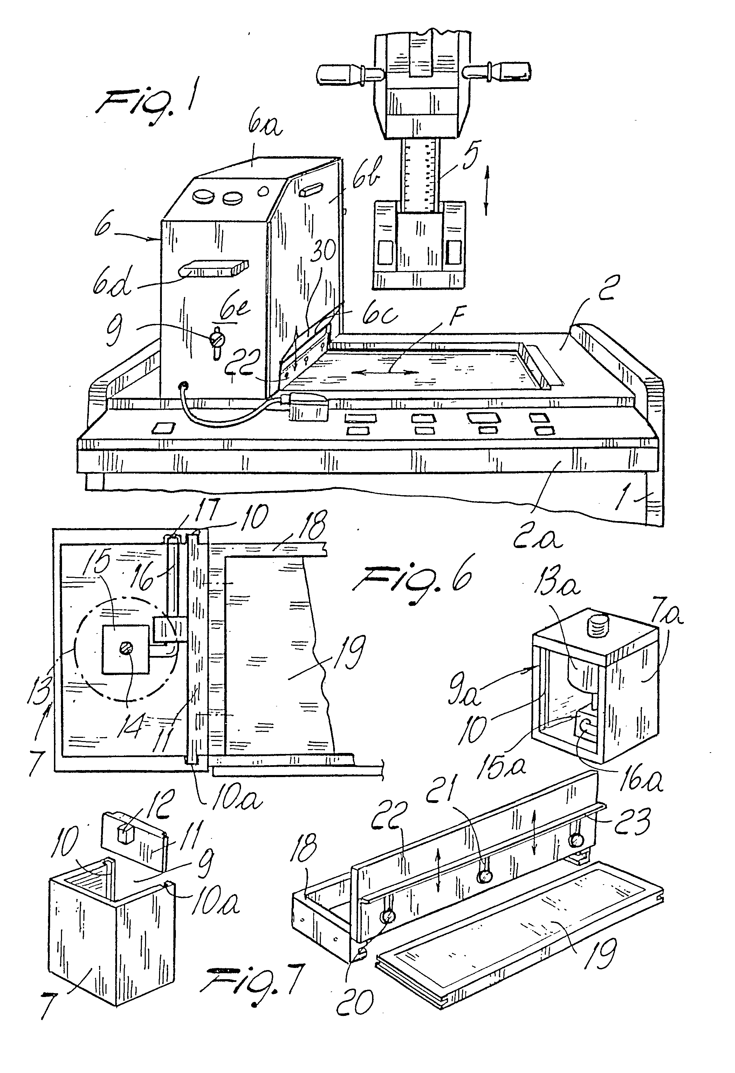

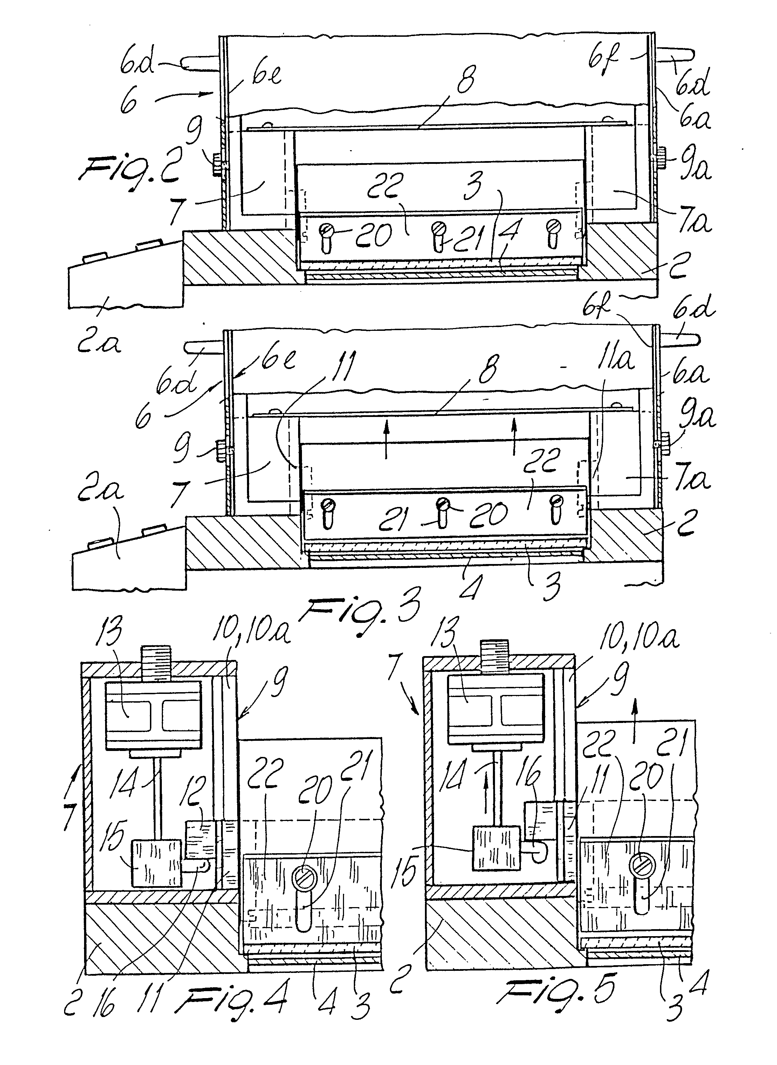

Une plaque transparente et normalement un vitre (3) est placé au-dessus du papier sensible (v. Figures 2,3,4 et 5), tandis qu'au-dessous de la plaque transparente il y a un rideau opaque (4) (Figures 2 et 3), déplaçable en direction des flèches (F) en Fig. 1 et ayant le but de protéger contre la lumière le papier sensible quand l'appareil n'est pas en fonction. Sur la plaque transparente est positionné un normal projecteur (5) pour la projection de l'image sur le papier sensible.

Le projecteur (5) est monté sur un support capable de le placer à une distance variable de la plaque transparente en fonction du grossissement désiré et aussi de le tourner latéralement pour faciliter le placement de la pellicule.

L'appareil est complété par une console (2a) munie de poussoirs et interrupteurs pour embrocher l'appareil sur le circuit électrique au moment d'effectuer un grossissement.

Pour consentir la réalisation du tirage par contact sur le papier sensible déjà utilisé pour l'impression des images, l'appareil prévoit l'application d'une tête à imprimer par contact avantageusement asservie aux interventions de l'appareil pour le tirage des copies photographiques de manière à obtenir l'impression de l'image et, à son côté, l'impression de signes, mots, symboles et autres.

Cette tête, globalement indiqué par (6) dans les figures, se compose d'un corps ou boîtier (6a) parallélipédique placé sur le plan (2), dont la base ouverte (6b) est tournée vers le papier sensible.

Le corps (6) présente une face avant verticale et le côté tourné vers le plan (2) est fermé par un volet ou paroi amovible (6b) avec une fenêtre (6c) à sa base.

Deux manches opposées (6d) servent à la prise et au soulèvement du corps (6a).

A l'intérieur du corps (6a) deux corps creux prismatiques (7) et (7a) sont disposés aux extrémités des côtés longitudinaux du plan (2), pratiquement à contact avec les faces internes des parois opposées (6e) et (6f) et du boîtier (6a).Les corps creux à boîte (7) et (7a) sont rigidement reliés entre eux par des traversins (8) (Figures 2 et 3) de manière à former un ensemble unique et ancré aux pa rois (6e) et (6f) de la tête (6) au moyen de goujons (9) et (9a) qui sont logés en oeillets à axe verticale et donc réglables en hauteur, de manière à placer les deux corps (7) et (7a) en position parfaitement parallèle au plan du papier sensible.

Les deux corps (7) et (7a) sont ouverts en correspondance de leures faces opposées et présentent les arêtes verticales opposées de guidage (10) et (10a) pour le coulissement vertical de deux parties de paroi (11) et (11a) respectivement, dont la face tournée vers l'intérieur du corps (7) et (7a) présente une saillie (12) et (12a) respectivement.

En outre, à l'intérieur des corps (7) et (7a) est monté un electro-aimant (13) et (13a) respectivement à ancre rectiligne (14) mouvable à l'intérieur du noyau magnétique avec course préétablie; à l'extrémité inférieure de chaque ancre rectiligne est prévu un petit bloc (15) et (15a) respectivement qui actionne un levier oscillant (16) et (16a) respectivement, dont une extrémité est articulée sur le bloc lui-même, tandis que son extrémité opposée est oscillante dans un creux (17) et (17a) respectivement prévu dans une paroi latérale du corps (7) et (7a) respectivement.

Les leviers oscillants (16) et (16a) engagent avec la surface de base les saillies (12) et (12a) des parois soulevables verticalement (11) et (11a).

Entre les deux parois (11) et (11a) soulevables au moyen des leviers oscillants (16) et (16a) il y a un petit cadre carré (18) placé en parallèle au plan du papier sensible, auquel on applique un porte-pellicule (19) formé par une plaque transparente pour l'application de la pellicule d'impression par contact directe sur papier sensible. Les parois (11) et (11a) et le porte-pellicule forment donc une unité déplaçable verticalement et commandée par les électro-aimants (13, 13a), qui est destinée à porter la pellicule pour le tirage par contact sur le papier sensible soit après soit avant l'impression de l'image photographique.

Sur le front externe du cadre (18) est monté et verticalement déplaçable au moyen de goujons (20) guidés dans les oeillets (21), une paroi rigide ou demirigide (22) apte à être soulevée et baissée pour intercepter, quand elle est baissée, la lumière émise par le projecteur (5), dans le but d'isoler l'ambiance de la tête à imprimer de la lumière externe, tandis que, quand la paroi (22) est soulevée, il est possible d'insérer et d'enlever le porte-pellicule (19).

Enfin, la tête à imprimer (6) est complétée par une source lumineuse - ne pas représentée -placée dans la tête elle-même et tournée vers le porte-pellicule ou dans un corps ajouté adjacent à la tête, communiquant avec son intérieur et muni de fentes pour reflecter la lumière vers le porte-pellicule. La source lumineuse est en tout cas insérée dans un circuit avec poussoirs et câbles de branchement aux appareils électriques prédisposés pour réaliser, en séquence coordonnée, la phase de tirage simultanée à celle du grossissement photographique.

Le fonctionnement et l'emploi de l'appareillage susdécrite peuvent être résumés brièvement comme il suit: en partant de l'appareil hors service, on commence par le soulèvement, au moyen des électroaimants (13) et (13a) du cadre (18) et de la paroi (22). Après ça, on monte la pellicule à imprimer sur le porte-pellicule (19), on retire le rideau et on abaisse le porte-pellicule (19) et la paroi jusqu'à ce que la pellicule est appuyé sur le papier sensible.

D'autre part, on introduit dans l'agrandisseur une normale pellicule photographique et on projecte simultanément la lumière des deux projecteurs et à opération accomplie on enlève la pellicule, on sou lève le porte-pellicule et (s'il est nécessaire) on ôte la pellicule. Enfin, on referme le rideau.

Pour une description plus complète du fonctionnement il faut ajouter que sur le côté de la tête à imprimer par contact tourné vers la zone de projection de l'image agrandie est prévue une aile oscillante (30) ayant la fonction d'empêcher que les reflets de lumière déterminés par le reflet de la paroi de la tête à imprimer par contact se propagent vers la zone de tirage de la pellicule.

**Revendications**

1.) Appareillage pour le tirage par contact de photographies en couleurs, en noir et blanc et similaires, **caractérisé** en ce qu'il comprend, en association à un projecteur pour l'impression d'images sur papier sensible placé ou coulissant sur un plan, une unité (11,11a,19) verticalement déplaçable à l'intérieur d'une tête à imprimer (6) et muni d'une plaque de base transparente (19) à laquelle on applique une pellicule pour l'impression de mots, signes et figures destinée à être portée à contact du papier sensible sur le plan susdit avant ou après le projecteur susdit, une source lumineuse agissant à travers une plaque transparente (19) pour impressionner le papier sensible quand la pellicule portée par cette plaque est à contact du papier lui-même, des moyens (13,13a) pour les déplacements verticaux de l'unité mobile susmentionnée au-dedans de la tête (6) asservis au projecteur pour l'impression des images, et des moyens (22) alternativement déplaçables aptes à intercepter le passage de la lumière du projecteur vers l'intérieur de la tête (6).

2.) Appareillage selon la revendication 1), **caractérisé** en ce que la plaque transparente porte-pellicule (19) est monté d'une manière détachable sur un cadre dont les côtés présentent des saillies interagissant avec des leviers alternativement actionnés par les moyens pour les déplacements verticaux de l'unité à imprimer, ces moyens étant des éléments d'attraction magnétique.

3.) Appareillage selon la revendication 2), **caractérisé** en ce que ses moyens d'attraction magnétique sont des électro-aimants avec ancre rectiligne et axialement déplaçable dans le noyau magnétique des électro-aimants, des leviers oscillants interagissant avec les consoles en saillie sur le cadre susmentionné étant associés à l'extrémité des ancres rectlignes susmentionnés.

4.) Appareillage selon les revendications 2) et 3), **caractérisé** en ce que les électro-aimants susmentionnés sont placés au-dedans de boîtiers rigidement reliés l'un à l'autre de manière à former un ensemble rigide ancré aux parois opposés de la tête pour l'impression par contact au moyen de goujons réglables en direction verticale indépendamment l'un de l'autre.

5.) Appareillage selon une ou plusieures des revendications précédentes, **caractérisé** en ce que les moyens susdites alternativement déplaçables pour l'interception du passage de la lumière dans la tête à imprimer consistent d'une paroi ou volet associé frontalement a l'unité déplaçable porte-pellicule, sur laquelle il est déplaçable verticalement.

6.) Appareillage selon une ou plusieures des revendications précédentes, **caractérisé** en ce qu'il comprend, sur la paroi latérale de la tête à imprimer par contact tournée vers la zone du tirage de l'agrandissement photographique, une aile orientable apte à empêcher les reflets sur le papier sensible et à définir une ligne de démarcation de la zone du papier sensible imprimée par contact et de la zone imprimé ou d'agrandissement.

7.) Appareillage selon une quelconque des revendications précédentes, où la source lumineuse est placée dans la tête à imprimer ou dans un corps y ajouté adjacent et communiquant avec l'intérieur de la tête, la lumière étant réfléchie par des mirroirs angulaires.

*Fig.1*

6a

6b

5

6

6d

30

9

6e

6c

22

F

2

2a

1

*Fig.6*

17  10

18

15

16

19

13a

7a

9a

13

10

14  11

15a

16a

10a

12

22  21

23

10  11

9

18

19

7  10a

*Fig.7*

20

EP 0 358 614 A2

Fig.2

Fig.3

Fig.4

Fig.5